# EUROPEAN PATENT SPECIFICATION

(11) **EP 0 703 250 B1**
(45) Date of publication and mention of the grant of the patent: **07.01.1999**
(21) Application number: 95306572.9
(22) Date of filing: 18.09.1995
(51) Int. Cl.: C08F 218/12, C08F 216/08

(54) **Polymers of allyl esters with allylic alcohols or propoxylated allylic alcohols**
Polymere aus Allylestern mit Allylalkohol oder Allyl-Alkohol-Propoxylate
Polymères d'esters allyliques et d'alcool allylique ou d'alcool allylique propoxylé

(30) Priority: 21.09.1994 US 309699; 15.05.1995 US 440865
(43) Date of publication of application: 27.03.1996
(73) Proprietor: ARCO Chemical Technology, L.P., Greenville, Delaware 19807 (US)
(72) Inventor: Guo, Shao-Hua, West Goshen, PA 19380 (US)
(74) Representative: Cropp, John Anthony David

(56) References cited:
- DE-A- 4 135 399
- FR-A- 2 018 263
- US-A- 2 995 535
- US-A- 3 876 588

## Description

### Field of the Invention:

The invention relates to polymers of allyl esters and allylic alcohols or propoxylated allylic alcohols, optionally with vinyl monomers. The polymers, which have a high concentration of hydroxyl groups, are useful in many types of curable polymer systems, such as coatings and adhesives.

### Background of the Invention:

Allyl alcohol, a well-known monomer, is available commercially from isomerization of propylene oxide. Ethylenic polymerization of allylic alcohols with other olefins is a potential route to polymers that have a high concentration of primary hydroxyl groups. Such copolymers are potentially valuable polymer intermediates because they will cure rapidly with isocyanates, anhydrides, and melamine resins to give useful thermoset articles.

Few allylic alcohol copolymers have actually become commercially important. Poly(allyl alcohol), for example, is not widely used in spite of its high concentration of primary hydroxyl groups because of its poor solubility in most common organic solvents. Copolymers of allyl alcohol and typical vinyl monomers such as styrene are known, but because allyl alcohol reacts much more slowly than vinyl monomers, a large excess of allyl alcohol is needed in the copolymerization to get a desirable hydroxyl group content.

Allyl ester polymers are known, but because allyl esters polymerize slowly with even high levels of free-radical initiators to give polymers of only low molecular weight, few allyl esters have any industrial use for polymers and copolymers (see S.R. Sandler and W. Karo, Polymer Syntheses, Vol. III (1980), Chapter 8, "Polymerization of Allyl Esters," pp. 248-294, at page 263). US-A-3876588 describes copolymers and terpolymers of maleic anhydride and allylic - alcohols. The copolymers are characterised by repeating cyclic lactone units and the absence of free hydroxyl groups.

US-A-2995535 describes copolymers of (meth)allyl alcohol, a styrenic monomer and an unsaturated dicarboxylic acid. There is no suggestion of including an ally ester.

New allyl alcohol copolymers are needed. Particularly valuable copolymers would be easy to prepare and would have a high - concentration of hydroxyl groups. Preferably, the copolymers would be soluble in common organic solvents to enable easy formulation into polyurethanes, polyesters, melamines, alkyd coatings, uralkyds, and other thermoset polymers.

### Summary of the Invention:

According to the present invention, there is provided a polymer containing hydroxyl groups and which comprises recurring units of:
(a) an allyl ester of the formula CH₂ = CR'-CH₂-O-CO-R in which R is hydrogen or a saturated linear, branched, or cyclic C₁-C₃₀ alkyl, aryl, or aralkyl group, and R' is selected from the group consisting of hydrogen and C₁-C₅ alkyl; and
(b) ethylenically unsaturated alcohol selected from allylic alcohols of the formula CH₂ = CR'-CH₂-OH, propoxylated allylic alcohols of the formula CH₂= CR'-CH₂-(A)ₙ-OH and mixtures of such allylic alcohols and propoxylated allylic alcohols, and in which R' is selected from the group consisting of hydrogen and C₁-C₅ alkyl, A is an oxypropylene group and n, which is the average number of oxypropylene groups in the propoxylated allylic alcohol, has a value less than or equal to 2;
said polymer having an average hydroxyl functionality within the range of 2 to 10, and a number average molecular weight within the range of 300 to 15,000.

The invention also provides a polymer derivative comprising the reaction product of a polymer as defined above and a member selected from the group consisting of:
(1) an anhydride, to produce a thermoset polyester;
(2) a di- or polyisocyanate or an isocyanate-terminated prepolymer, to produce a polyurethane coating or adhesive;
(3) a styrene/maleic anhydride copolymer, to produce a crosslinked polymeric resin;
(4) a melamine resin, to produce a melamine coating;
(5) a fatty acid, to produce an alkyd coating;
(6) a fatty acid, a low molecular weight polyol, and a polyisocyanate, to produce a polyurethane-modified alkyd coating; and
(7) an acrylic acid or acrylic acid derivative, to produce an acrylate composition.

The invention further provides a polymer blend comprising the said polymer and one or more polymers selected from polyether polyols, phenolic resins, acrylates and epoxy resins.

Yet further provided by the invention is the reaction product of (a) said polymer blend and (b) a member selected from the group consisting of:
(1) an anhydride, to produce a thermoset polyester;
(2) a di- or polyisocyanate or an isocyanate-terminated prepolymer, to produce a polyurethane coating or adhesive;
(3) a styrene/maleic anhydride copolymer, to produce a crosslinked polymeric resin;
(4) a melamine resin, to produce a melamine coating;
(5) a fatty acid, to produce an alkyd coating;
(6) a fatty acid, a low molecular weight polyol, and a polyisocyanate, to produce a polyurethane-modified alkyd coating; and
(7) an acrylic acid or acrylic acid derivative, to produce an acrylate composition.

One embodiment of the present invention is an allyl ester/allylic alcohol polymer. The polymer comprises recurring units of (a) an allyl ester of the formula CH₂= CR'-CH₂-O-CO-R in which R is hydrogen or a saturated linear, branched, or cyclic C₁-C₃₀ alkyl, aryl, or aralkyl group, and R' is selected from the group consisting of hydrogen and C₁-C₅ alkyl; and (b) an allylic alcohol of the formula CH₂ = CR'-CH₂-OH in which R' is selected from the group consisting of hydrogen and C₁-C₅ alkyl. The polymer has an average hydroxyl functionality within the range of 2 to 10, and a number average molecular weight within the range of 300 to 15,000.

The present invention also provides polymers of the allyl esters described above and propoxylated allylic alcohols of the formula CH₂=CR'-CH₂- (A)ₙ-OH in which A is an oxypropylene group, R' is selected from the group consisting of hydrogen and C₁-C₅ alkyl, and n, which is the average number of oxypropylene groups in the propoxylated allylic alcohol, has a value less than or equal to 2. These polymers also have average hydroxyl functionalities within the range of 2 to 10, and number average molecular weights within the range of 300 to 15,000.

We have found that, compared with other allylic alcohol copolymers, those of the invention are generally easier to prepare because of the similar monomeric reactivity ratios.

The polymers of the invention may further include recurring units of (c) a vinyl monomer other than (a) or (b). Such polymers, which are referred to herein for convenience as terpolymers because they contain recurring units of monomers of groups (a), (b) and (c), are also easy to prepare.

Compared with poly(allyl alcohol), the polymers of the invention have much better solubility in common organic solvents. The high hydroxyl group content and favourable solubility characteristics make the polymers of the invention easy to formulate into many polymer products, including polyurethanes, polyesters, melamines, alkyds, uralkyds, and other thermoset polymers.

### Detailed Description of the Invention:

The polymers of the invention comprise recurring units of (1) an allyl ester and (2) an allylic alcohol and/or propoxylated allylic alcohol.

Allyl esters suitable in the invention have the general structure: CH₂=CR'-CH₂-O-CO-R in which R is hydrogen or a saturated linear, branched, or cyclic C₁-C₃₀ alkyl, aryl, or aralkyl group, and R' is selected from the group consisting of hydrogen and C₁-C₅ alkyl. Suitable allyl esters include, but are not limited to allyl formate, allyl acetate, allyl butyrate, allyl benzoate, and methallyl acetate, and mixtures thereof. Particularly preferred are allyl esters derived from allyl alcohol and methallyl alcohol. Most preferred are C₁-C₅ alkyl esters of allyl alcohol and methallyl alcohol.

Allylic alcohols suitable in the invention have the general structure: CH₂=CR'-CH₂-OH in which R' is selected from the group consisting of hydrogen and C₁-C₅ alkyl. Suitable allylic alcohols include allyl alcohol, methallyl alcohol, and 2-ethyl-2-propen-1-ol, and mixtures thereof. Allyl alcohol and methallyl alcohol are preferred.

The polymers of the invention can include, instead of or in addition to an allylic alcohol, recurring units of a propoxylated allylic alcohol. Suitable propoxylated allylic alcohols have the formula CH₂ = CR'-CH₂- (A)ₙ- OH in which A is an oxypropylene group, R' is selected from the group consisting of hydrogen and C₁-C₅ alkyl, and n, which is the average number of oxypropylene groups in the propoxylated allylic alcohol, has a value less than or equal to 2. The oxypropylene groups in the propoxylated allylic alcohols have one or both of the structures -OCH(CH₃)-CH₂- and -O-CH₂-CH(CH₃)-, which will depend on the method of synthesis.

Suitable propoxylated allylic alcohols can be prepared by reacting an allylic alcohol with up to 2 equivalents of propylene oxide in the presence of a basic catalyst as described, for example, in U.S. Patent Nos. 3,268,561 and 4,618,703. As will be apparent to those skilled in the art, suitable propoxylated allylic alcohols can also be made by acid catalysis, as described, for example, in J. Am. Chem. Soc. 71 (1949) 1152.

The relative proportions of allyl ester and ethylenically unsaturated alcohol in the polymer are not critical. The actual proportions used will generally depend upon many factors, including, for example, the desired hydroxyl end group content of the polymer, the desired solubility characteristics, the identity of the R groups, and other considerations. Generally, the polymers will comprise from 1 to 99 wt.% of the allyl ester and from 99 to 1 wt.% of the alcohol. More preferred polymers will have from 5 to 95 wt.% of the allyl ester and from 95 to 5 wt.% of the alcohol. Most preferred are polymers which comprise from 30 to 70 wt.% of the allyl ester and from 70 to 30 wt.% of the alcohol.

The terpolymers of the invention include recurring units of a vinyl monomer. Vinyl monomers useful in the invention are compounds having a terminal ethylenic unsaturation (i.e. the group CH₂ = C〈) available for polymerization with the other comonomers. Preferred vinyl monomers include vinyl aromatic monomers, vinyl halides, vinyl ethers, acrylonitrile, methacrylonitrile, acrylamide, methacrylamide, acrylates, methacrylates, and vinyl esters. Particularly preferred are vinyl aromatic monomers and acrylates or methacrylates.

The relative proportions of allyl ester, ethylenically unsaturated alcohol, and vinyl monomer are not critical. The actual proportions used will generally depend upon many factors, including, for example, the desired hydroxyl end group content of the polymer, the desired solubility characteristics, the identity of the R groups, and other considerations. Generally, the terpolymers will comprise from 1 to 98 wt.% of the allyl ester, from 1 to 98 wt.% of the alcohol, and from 1 to 98 wt.% of the vinyl monomer. Where the alcohol is a propoxylated allyl alcohol, in one embodiment of the invention the proportions of the alcohol, the allyl ester and the vinyl monomer in the polymer may be as specified in claim 6. More preferred terpolymers will have from 5 to 85 wt.% of the allyl ester, from 5 to 85 wt.% of the alcohol, and from 10 to 90 wt.% of the vinyl monomer.

The polymers of the invention have average hydroxyl functionalities within the range of 2 to 10, preferably from 3 to 6. The polymers will have number average molecular weights within the range of 300 to 15,000. A more preferred range is from 500 to 3000.

Preferred polymers of the invention will have hydroxyl numbers within the range of 10 to 950 mg KOH/g. A more preferred range is from 25 to 500 mg KOH/g.

Preferred allyl ester/propoxylated allylic alcohol copolymers of the invention will have hydroxyl numbers within the range of 10 to 480 mg KOH/g. A more preferred range is from 25 to 300 mg KOH/g.

The polymers of the invention are made by free-radical polymerization. The monomers can be simply combined and heated in the presence of a free-radical initiator at a temperature effective to polymerize the monomers.

Where a vinyl monomer is included to form a terpolymer, usually the allyl monomers are combined with a portion of the vinyl monomer and heated in the presence of a free-radical initiator at a temperature effective to polymerize the monomers. The remaining vinyl monomer is continuously added while maintaining a constant ratio of allyl monomer to vinyl monomer to produce relatively uniform allyl terpolymers.

Suitable free-radical initiators are the peroxide and azo-type initiators well known to those skilled in the art. Peroxide initiators are preferred. Examples include hydrogen peroxide, benzoyl peroxide, di-tert-butylperoxide, tert-butylhydroperoxide, tert-butylperbenzoate and azobis(isobutyronitrile)(AIBN).

The monomers and free-radical initiator can be combined and reacted in any desired way. We found that improved yields can be achieved, however, if the initiator is added gradually to the reaction mixture during the course of the polymerization. Thus, it is preferred to introduce the initiator either continuously or intermittently to the polymerization reaction mixture.

The process can be performed at any temperature effective to initiate free-radical polymerization. Generally, it is preferred to perform the reaction at a temperature within the range of 90°C to 200°C. A more preferred range is from 125°C to 180°C; most preferred is the range of 135°C to 165°C.

The polymerizations can be performed at any suitable pressure. Generally, it is preferred to perform the polymerizations at pressures greater than 100 KPa (1 atmosphere), particularly when allyl alcohol is a reactant. Particularly preferred is the pressure range from 138 to 3448 KPa (20 to 500 psi).

Optionally, a solvent is included in the polymerization. Suitable solvents are those in which the monomers, free-radical initiator, and polymeric reaction products are soluble. Preferred solvents for the polymerization include alcohols, ethers, esters, glycols, glycol ethers, and glycol ether esters. Aliphatic hydrocarbons are generally not suitable because the polymer products are usually not soluble in aliphatic hydrocarbons.

Compared with poly(allyl alcohol), the allyl ester copolymers of the invention are soluble in a broader range of organic solvents (see Table 1, below). Poly(allyl alcohol) is generally soluble in alcohols, but is not soluble in many commonly used organic solvents such as ethers, esters, ketones, and hydrocarbons. In contrast, the allyl ester copolymers of the invention are soluble in a broad range of solvents. The terpolymers of the invention are also soluble in a wide variety of organic solvents, including, for example, ethers, glycol ethers, glycol ether esters, ketones, esters, and aromatic hydrocarbons. Specific examples include diethyl ether, tetrahydrofuran, butyl methyl ether, propylene glycol tert-butyl ether, propylene glycol n-butyl ether, propylene glycol methyl ether acetate, acetone, methyl ethyl ketone, methyl isobutyl ketone, methyl amyl ketone, ethyl acetate, butyl acetate, toluene, and xylenes, and mixtures thereof.

The favourable solubility characteristics of the polymers of the invention give formulators of adhesives, coatings, elastomers, and sealants greater flexibility.

The polymers of the invention are useful in a variety of applications, including, for example, polyesters, polyurethanes, alkyds, uralkyds, acrylates, melamine resins, and other thermoset polymers. These uses are described in more detail below, and in the examples.

The invention includes thermoset polyesters that are the reaction products of the polymers of the invention and an anhydride or a di- or polycarboxylic acid. The use of such a reaction to prepare a thermoset polyester coating is shown in Examples 9 and 22 below. Suitable anhydrides and carboxylic acids are those commonly used in the polyester industry. Examples include phthalic anhydride, phthalic acid, maleic anhydride, maleic acid, adipic acid, isophthalic acid, terephthalic acid, sebacic acid, succinic acid, and trimellitic anhydride, and mixtures thereof. Other suitable methods for making thermoset polyesters are described in U.S. Patent No. 3,457,324.

A polyurethane composition is made by reacting a polymer of the invention with a di- or polyisocyanate or an isocyanate-terminated prepolymer. Prepolymers derived from the polymers of the invention can be used. Optionally, a low molecular weight chain extender (e.g. diol, or diamine) is included. Suitable di- or polyisocyanates are those well known in the polyurethane industry, and include, for example, toluene diisocyanate, MDI, polymeric MDls, carbodiimide-modified MDls, hydrogenated MDIs and isophorone diisocyanate. Isocyanate-terminated prepolymers are made in the usual way from a polyisocyanate and e.g. a polyether polyol, or polyester polyol. The polyurethane is formulated at any desired NCO index. If desired, all of the available NCO groups are reacted with hydroxy groups from the polymers of the invention and any chain extenders. Alternatively, an excess of NCO groups remain in the product, as in a moisture-cured polyurethane. Many types of polyurethane products can be made, including, for example, adhesives, sealants, coatings, and elastomers. Example 10 illustrates a non-solvent polyurethane adhesive prepared from an isocyanate-terminated prepolymer and a polymer of the invention and Examples 17 to 19 illustrate polyurethane coatings. Other suitable methods for making polyurethane compositions are described in U.S. Patent No. 2,965,615.

The invention includes alkyd compositions prepared by reacting a polymer of the invention with an unsaturated fatty acid. Suitable unsaturated fatty acids are those known in the art as useful for alkyd resins, and include, for example, oleic acid, ricinoleic acid, linoleic acid and licanic acid, and mixtures thereof. Mixtures of unsaturated fatty acids and saturated fatty acids such as lauric acid or palmitic acid can also be used. The alkyd resins are particularly useful for making alkyd coatings. For example, a polymer of the invention, or a mixture of the polymer and glycerin or another low molecular weight polyol, is first partially esterified with an unsaturated fatty acid to give an alkyd resin. The resin is then combined with an organic solvent, and the resin solution is stored until needed. A drying agent such as lead acetate or cobalt acetate is added to the solution of alkyd resin, the solution is spread onto a surface, the solvent evaporates, and the resin cures leaving an alkyd coating of the invention. Examples 12 and 23 below show ways to make an alkyd coating of the invention. Other suitable methods for making alkyd resins and coatings are described in U.S. Patent No. 3,423,341.

Instead of combining the alkyd resin with an organic solvent, the resin can be dispersed in water to make a water-based alkyd coating formulation. To improve the water dispersability of the alkyd resin, a free hydroxyl group in the alkyd resin can be converted to a salt. For example, the alkyd resin can be reacted with phthalic anhydride to give a resin that contains phthalic acid residues; addition of sodium hydroxide makes the sodium phthalate salt, and provides a water-dispersable alkyd resin derived from the polymer of the invention. See, for example, U.S. Patent No. 3,483,152.

The invention includes polyurethane-modified alkyds (uralkyds) prepared from the polymers of the invention. These resins are especially valuable for making uralkyd coatings. The polymer of the invention is first partially esterified with an unsaturated fatty acid (described above) to give an alkyd resin. The alkyd resin, which contains some free hydroxyl groups, is reacted with a di- or polyisocyanate (described above) to give a prepolymer. The prepolymer is then reacted with a chain extender, atmospheric moisture, or additional alkyd resin to give a uralkyd coating. Other suitable methods for making uralkyd resins and coatings are described in U.S. Patent No. 3,267,058.

The invention includes thermoset polymers prepared by reacting the polymers of the invention with a thermoplastic polymer or a crosslinking agent. For example, melamine-based polymers, especially coatings, can be prepared by reacting the polymers of the invention with melamine resins. Suitable melamine resins include commercial grade hexamethoxymethylmelamines, such as, for example, CYMEL 303 crosslinking agent, a product of American Cyanamid Company. Examples 8, 20 and 21 below illustrates the preparation of melamine coatings from polymers of the invention. A thermoset resin is obtained by reacting the polymers of the invention with a crosslinkable thermoplastic resin. Suitable crosslinkable thermoplastic resins are anhydride or carboxylic acid-containing polymers such as, for example, polyacrylic acid, polymethacrylic acid, isobutylene-maleic anhydride copolymers, and styrene-maleic anhydride copolymers. Example 11 below illustrates the preparation of a crosslinked polymeric film of this type from an allyl alcohol/allyl acetate copolymer and a styrene-maleic anhydride copolymer.

An acrylate composition of the invention is prepared by reacting some or all of the hydroxyl groups of the polymers of the invention with an acrylic acid or acrylic acid derivative. Suitable acrylic acids and derivatives include acrylic acid, methacrylic acid, acryloyl chloride, methacryloyl chloride, methyl acrylate and methyl methacrylate. Examples 13 and 24 below illustrate this application. Suitable methods for preparing acrylates are described, for example, in U.S. Patent No. 2,917,538.

The favourable solubility characteristics of the polymers of the invention make them well-suited for blending with other polymers. The polymers of the invention are easily blended with, for example, polyether polyols, phenolic resins, acrylates, and epoxy resins, and the blends can be used in the applications described earlier. The polymers of the invention can also be used as compatibilizers to improve the miscibility of polymer mixtures. In contrast, poly(allyl alcohol) is generally not compatible with other polymers, and cannot be blended with polymers or used as a compatibilizer for other polymers.

The following examples merely illustrate the invention.

### Example 1. Preparation of Allyl Alcohol/Allyl Acetate Copolymer

Allyl alcohol (200 g), allyl acetate (200 g), and di-tert-butylperoxide (10 g) are charged to a one-liter stainless-steel reactor equipped with an addition pump, stirrer, steam heating jacket, temperature controller, nitrogen inlet, and vacuum distillation apparatus. The reactor is purged three times with nitrogen, is sealed, and the contents are heated to 150°C. Di-tert-butylperoxide (40 g) is added continuously to the reactor using the addition pump over 2.5 h. Polymerization continues at 150°C for an additional 2 h. Unreacted monomers are removed by vacuum distillation. The last traces of residual monomer are removed by stripping with water.

The yield of clear, slightly yellow liquid copolymer is 166 g (41.5%). Hydroxyl number = 350 mg KOH/g. Gel permeation chromatography (GPC) using polystyrene standards shows that the product has Mw = 1081, Mn = 708, and Mw/Mn = 1.52.

### Example 2. Preparation of Allyl Alcohol/Allyl Acetate Copolymer

The procedure of Example 1 is generally followed with allyl alcohol (120 g), allyl acetate (600 g), and tert-butylhydroperoxide (70% in water, 23 g) as the initiator. After purging the reactor with nitrogen and sealing it, the contents are heated to 150°C. Additional 70% aq. tert-butylhydroperoxide (80 g) is added continuously to the reactor using the addition pump over 4 h. Polymerization continues at 150°C for an additional 0.5 h. Unreacted monomers are removed by vacuum distillation. The last traces of residual monomer are removed by stripping with water.

The yield of clear, slightly yellow liquid copolymer is 310 g (43.1%). Hydroxyl number = 107 mg KOH/g. GPC analysis: Mw = 1248, Mn = 778, and Mw/Mn = 1.60.

### Example 3. Preparation of Allyl Alcohol/Allyl Butyrate Copolymer

The procedure of Example 1 is generally followed with allyl alcohol (120 g), allyl butyrate (600 g), and tert-butylhydroperoxide (70% in water, 23 g). After purging the reactor with nitrogen and sealing it, the contents are heated to 150°C. Additional 70% aq. tert-butylhydroperoxide (80 g) is added continuously to the reactor using the addition pump over 4 h. Polymerization continues at 150°C for an additional 0.5 h. Unreacted monomers are removed by vacuum distillation. The last traces of residual monomer are removed by stripping with water.

The yield of clear, slightly yellow liquid copolymer is 402 g (55.9%). Hydroxyl number = 93 mg KOH/g. GPC analysis: Mw = 1811, Mn = 1103, and Mw/Mn = 1.64.

### Example 4. Preparation of Allyl Alcohol/Allyl Butyrate Copolymer

The procedure of Example 1 is generally followed with allyl alcohol (60 g), allyl butyrate (600 g), and di-tert-butylperoxide (6.0 g). The reactor is purged three times with nitrogen, is sealed, and the contents are heated to 150°C. Di-tert-butylperoxide (60 g) is added continuously to the reactor using the addition pump over 5 h. Polymerization continues at 150°C for an additional 0.5 h. Unreacted monomers are removed by vacuum distillation. The last traces of residual monomer are removed by stripping with water.

The yield of clear, slightly yellow liquid copolymer is 476 g (72.2%). Hydroxyl number = 48 mg KOH/g. GPC analysis: Mw = 2220, Mn = 1270, and Mw/Mn = 1.75.

### Example 5. Preparation of Propoxylated Allyl Alcohol/Allyl Acetate Copolymer

The procedure of Example 1 is generally followed with propoxylated allyl alcohol (average of 1.6 oxypropylene units; 300 g), allyl acetate (300 g), and di-tert-butylperoxide (20 g). The reactor is purged three times with nitrogen, is sealed, and the contents are heated to 150°C. Di-tert-butylperoxide (80 g) is added continuously to the reactor using the addition pump over 4 h. Polymerization continues at 150°C for an additional 0.5 h. Unreacted monomers are removed by vacuum distillation. The last traces of residual monomer are removed by stripping with water.

The yield of clear, slightly yellow liquid copolymer is 420 g (70.0%). Hydroxyl number = 127 mg KOH/g. GPC analysis: Mw = 1810, Mn = 1040, and Mw/Mn = 1.73.

### Comparative Example 6. Preparation of Poly(allyl alcohol)

The procedure of Example 1 is generally followed to make poly(allyl alcohol). Allyl alcohol (432 g) and tert-butylperoxide (6 g) are initially charged to the reactor. The remaining tert-butylperoxide (60 g) is added to the reactor at 150°C over 5 h. Polymerization continues at 150°C for an additional 0.5 h. Unreacted monomers are removed by vacuum distillation. The last traces of residual monomer are removed by stripping with water.

The yield of viscous clear, slightly yellow liquid copolymer is 121 g (28.0%). Carbon-13 NMR analysis shows that the product is a homopolymer of allyl alcohol. Hydroxyl number and GPC analysis are not obtained because the product is not soluble in the solvents used for analysis.

### Example 7. Solubility Testing of Allylic Alcohol/Allyl Ester Copolymers

The solubility of the polymers obtained in Examples 1-5 and Comparative Example 6 is tested in a variety of common organic solvents, including isopropyl alcohol, propylene glycol tert-butyl ether, tetrahydrofuran, acetone, methyl ethyl ketone, methyl isobutyl ketone, ethyl acetate, xylenes, and cyclohexane. Results appear in Table 1. Solubility is tested by mixing 10 wt.% of the polymer in the solvent to give a clear solution (soluble = sol), a cloudy solution (partly soluble = p. sol), or two distinct layers (insoluble = insol).

The results suggest that the copolymers of the invention, because they have good solubility in a broad range of common organic solvents, will be easy to formulate into many end uses, especially when compared with poly(allyl alcohol).

### Example 8. Melamine Coatings from an Allyl Alcohol/Allyl Acetate Copolymer

The allyl alcohol/allyl acetate copolymer of Example 2 is formulated into melamine coatings as follows. The copolymer (45 g) is mixed with CYMEL 303 melamine resin (15 g, product of American Cyanamid), p-toluenesulfonic acid (0.06 g), methyl ethyl ketone (9 g), and ethyl acetate (9 g). The solution is coated onto aluminum Q-panels (Al-35, Paul N. Gardner Co., Inc.) at a wet thickness of 0.076 mm (3 mils). The coated panels are dried in a hood for 12 h at room temperature, and are then cured in an oven at 110°C to 120°C for 15 to 90 min.. The coatings show good hardness, adhesion, and flexibility properties.

### Example 9. Preparation of a Thermoset Polyester Coating

In this example, an allyl alcohol/allyl acetate copolymer is formulated into a thermosetting polyester coating. An allyl alcohol/allyl acetate copolymer (500 g, prepared as in Example 1) and isophthalic acid (94 g) are charged into a reactor and heated to 220°C while sparging nitrogen through the mixture. After the acid number reaches 60-70 mg KOH/g, adipic acid (73 g), isophthalic acid (60 g), and maleic anhydride (6 g) are added, and the mixture is reheated to 220°C. Heating continues at 220°C until the acid number drops to 10-12 mg KOH/g. 2-Ethoxyethanol acetate (270 g) is then added.

Six hundred grams of the resulting polyester solution is charged into a reactor equipped with an agitator, thermometer, reflux condenser, addition funnel, and nitrogen inlet, and the mixture is heated to 120°C. A mixture of 2-hydroxyethyl acrylate (10 g), ethyl acrylate (54 g), styrene (5 g), methyl methacrylate (20 g), methacrylic acid (2 g), and di-t-butylperoxide (1.0 g) is charged to the addition funnel. The acrylate monomer mixture is added to the polyester mixture over 2 h, and is then kept at 120°C for another hour. t-Butyl perbenzoate (0.2 g) is added, and the mixture is kept at 120°C for another 2 h. A second 0.2 g portion of t-butyl perbenzoate is added, and heating continues for another 2 h. The product solution is finally diluted with 1-butanol (30 g) and xylene (20 g). This solution is expected to be useful as a thermosettable coating. The solution can be applied as a film, and allowed to cure at room temperature or elevated temperature.

### Example 10. Preparation of a Non-Solvent Polyurethane Adhesive

This example illustrates the preparation of a non-solvent polyurethane adhesive by reacting an allyl alcohol/allyl acetate copolymer with an isocyanate-terminated prepolymer.

An allyl alcohol/allyl acetate copolymer (10 g, prepared as in Example 1), is mixed well at room temperature with 10 g of a prepolymer (5.7 wt.% NCO) prepared from ARCOL 3020 polyether triol (2000 mol. wt., all-PO triol, product of ARCO Chemical Co.), and toluene diisocyanate. The resulting adhesive mixture is expected to be useful for bonding wood, stainless steel, glass, and polystyrene plastic.

### Example 11. Preparation of a Crosslinked Polymer Film

In this example, an allyl alcohol/allyl acetate copolymer is used to make a crosslinked polymer film.

DYLARK 378 resin (a terpolymer of styrene (67%), maleic anhydride (13%), and butadiene rubber (20%), product of ARCO Chemical Co., 10 g), and the allyl alcohol/allyl acetate copolymer of Example 1 (1.5 g) are dissolved in tetrahydrofuran (50 g). The solution is spread and dried on an aluminum pan. The resulting polymer film is cured at 200°C for 0.5 h. The expected product is a cured, thermoset polymer film.

### Example 12. Preparation of an Alkyd Coating

In this example, an alkyd coating is prepared from an allyl alcohol/allyl acetate copolymer.

The allyl alcohol/allyl acetate copolymer of Example 1 (87 g), safflower oil (64 g), lithium hydroxide (0.03 g), phthalic anhydride (25.5 g), maleic anhydride (0.22 g), triphenyl phosphite (0.07 g), and xylene (18 g) are charged into a reactor equipped with an agitator, thermometer, reflux condenser with a Dean-Stark trap, and nitrogen inlet. The mixture is heated to 240°C, and is kept at that temperature until the acid number drops to 10-20 mg KOH/g. After the reaction, xylene is added to dilute the mixture to 50 wt.% solids. This solution is expected to be useful as an alkyd coating. The solution can be applied as a film, and allowed to cure at room temperature or at elevated temperature.

### Example 13. Preparation of a Curable Acrylate Composition

In this example, a curable acrylate composition is prepared from an allyl alcohol/allyl acetate copolymer.

The allyl alcohol/allyl acetate copolymer of Example 2 (100 g), acrylic acid (13.8 g), toluene (20 g), hydroquinone (0.15 g), and sulfuric acid (0.15 g), are charged into a reactor equipped with an agitator, thermometer, reflux condenser with Dean-Stark trap, and nitrogen inlet. The mixture is heated to reflux (about 100°C to 115°C), and water (3.4 g) is removed using the trap. After no additional water is being produced, the toluene is removed by vacuum distillation. The expected product is a copolymer of allyl alcohol and allyl acetate in which most or all of the hydroxyl groups from the original copolymer are converted to acrylate ester groups.

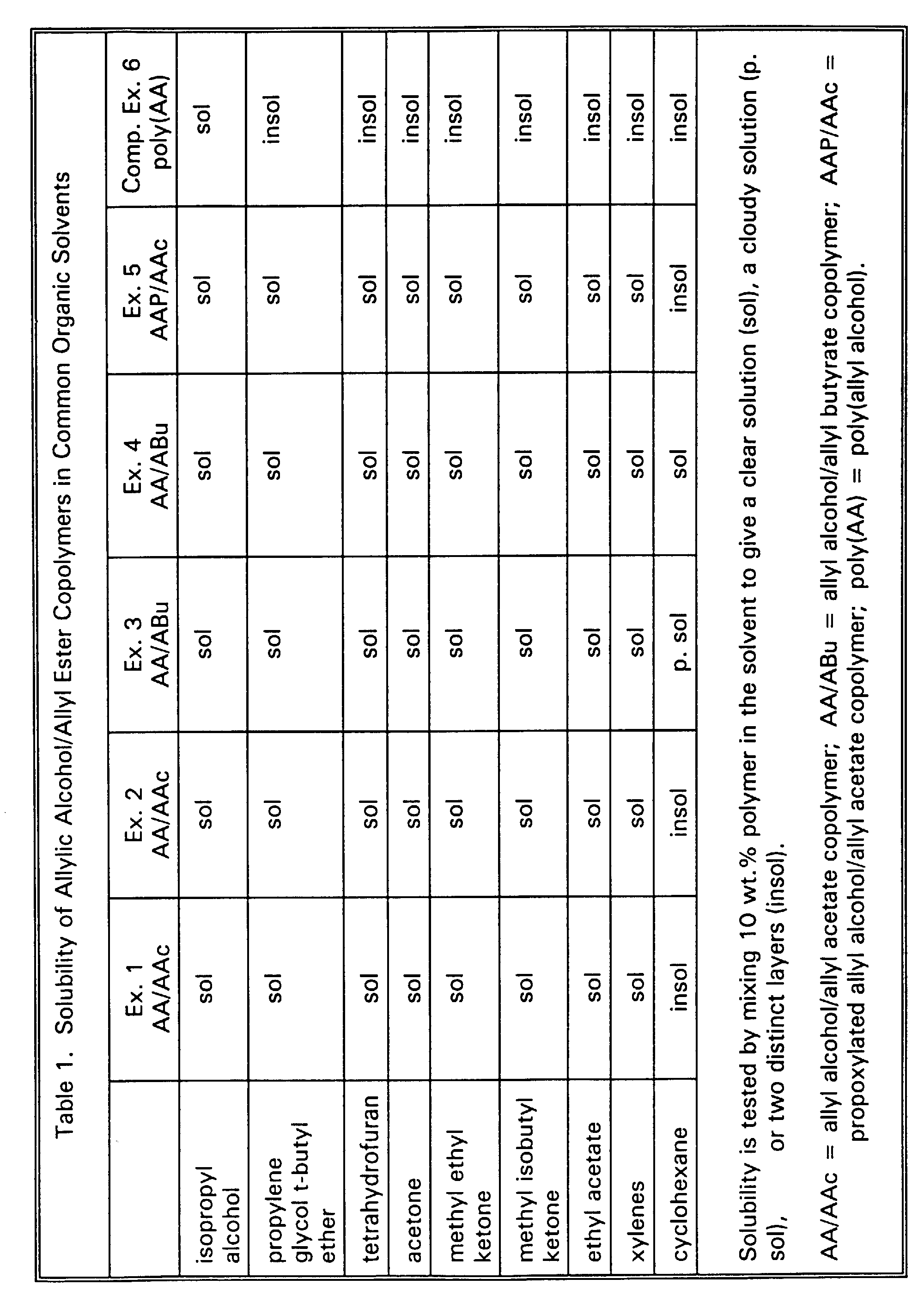

### Example 14. Preparation of a Terpolymer from Allyl Alcohol, Allyl Butyrate, and Methyl Methacrylate

Allyl alcohol (150 g), allyl butyrate (225 g), methyl methacrylate (45 g), and T-HYDRO 70 initiator (t-butyl hydroperoxide, 70% in water, product of ARCO Chemical Company, 28 g) are charged to a one-liter stainless-steel reactor equipped with agitator, steam heating jacket, temperature controller, nitrogen purge device, vacuum distillation device, and addition pump. Methyl methacrylate (180 g) and T-HYDRO 70 initiator (15 g) are mixed, cooled to 5°C, and charged into the addition pump. After purging three times with nitrogen, the reactor is sealed, and the reactor contents are heated to 140°C. The mixture of methyl methacrylate and T-HYDRO 70 initiator is pumped into the reactor during the polymerization at a decreasing rate. The addition rates are: 50 g/h for the first hour, 45 g/h for the second hour, 40 g/h for the third hour, 35 g/h for the fourth hour, and 25 g/h for the fifth hour. Heating continues at 140°C for an additional 30 min. following completion of the monomer addition. Unreacted monomers are removed by vacuum distillation, leaving 344 g of terpolymer having Mw = 2800, Mn = 1410, and hydroxyl number = 91.9 mg KOH/g.

### Example 15. Preparation of a Terpolymer from Allyl Alcohol, Allyl Acetate, and Methyl Methacrylate

Allyl alcohol (150 g), allyl acetate (225 g), methyl methacrylate (45 g), and T-HYDRO 70 initiator (t-butyl hydroperoxide, 70% in water, product of ARCO Chemical Company, 28 g) are charged to a one-liter stainless-steel reactor equipped with agitator, steam heating jacket, temperature controller, nitrogen purge device, vacuum distillation device, and addition pump. Methyl methacrylate (180 g) and T-HYDRO 70 initiator (15 g) are mixed, cooled to 5°C, and charged into the addition pump. After purging three times with nitrogen, the reactor is sealed, and the reactor contents are heated to 140°C. The mixture of methyl methacrylate and T-HYDRO 70 initiator is pumped into the reactor during the polymerization at a decreasing rate. The addition rates are: 50 g/h for the first hour, 45 g/h for the second hour, 40 g/h for the third hour, 35 g/h for the fourth hour, and 25 g/h for the fifth hour. Heating continues at 140°C for an additional 30 min. following completion of the monomer addition. Unreacted monomers are removed by vacuum distillation, leaving 346 g of terpolymer having Mw = 2700, Mn = 1350, and hydroxyl number = 88.3 mg KOH/g .

### Example 16. Preparation of a Terpolymer from Propoxylated Allyl Alcohol, Allyl Butyrate, and Methyl Methacrylate

Allyl alcohol propoxylate (average of 1.6 oxypropylene units, 176 g), allyl butyrate (88 g), methyl methacrylate (88 g), and di-tert-butylperoxide (5.0 g) are charged to a one-liter stainless steel reactor equipped with agitator, steam heating jacket, temperature controller, nitrogen purge device, vacuum distillation device, and addition pump. Methyl methacrylate (265 g) and di-tert-butylperoxide (15 g) are mixed and charged to the addition pump. After purging three times with nitrogen, the reactor is sealed, and the reactor contents are heated to 140°C. The mixture of methyl methacrylate and di-t-butyl peroxide is pumped into the reactor during the polymerization at a decreasing rate. The addition rates are: 71 g/h for the first hour, 64 g/h for the second hour, 56 g/h for the third hour, 47 g/h for the fourth hour, and 40 g/h for the fifth hour. Heating continues at 140°C for an additional 30 min. following completion of the monomer addition. Unreacted monomers are removed by vacuum distillation, leaving 540 g of terpolymer having Mw = 2950, Mn = 1580, and hydroxyl number = 88.8 mg KOH/g.

### Example 17. Polyurethane Coating (Baking)

The terpolymer of Example 14 (70 g) is dissolved in methyl amyl ketone (30 g) to form a 70% terpolymer solution. To 17.5 g of this solution is added an aliphatic polyisocyanate based on hexamethylene diisocyanate (HDI) (DESMODUR N-3390, product of Miles, 4.5 g). After mixing well, a portion of the coating solution is poured onto clean steel panels and is drawn down to a uniform wet film of thickness 0.076 mm (0.003") with a doctor blade. The panels are dried in a hood for 30 min., and are then baked in an oven at 135°C for 1 h. Testing of the panels gives the following results: Reverse impact: 560 mm/kg (10 in/lb); Pencil hardness: H; Gloss at 20°: 91; Gloss at 60°: 105; T-bend: passes without cracking; Cross-cut adhesion (ASTM D-3359): 5.

### Example 18. Polyurethane Coating (Ambient Temperature Curing)

The formulation of Example 17 is prepared, except that dibutyltin dilaurate (0.005% based on total amount of binders) is included. The panels are dried in a hood at room temperature (25°C). The panels are tack-free within 5 h, and fully dried within 24 h. Testing of the panels gives the following results: Pencil hardness: H; Gloss at 20°: 94; Gloss at 60°: 105.

### Example 19. Polyurethane Coating (Baking)

The terpolymer of Example 16 (73 g) is dissolved in methyl amyl ketone (27 g) to form a 73% terpolymer solution. To 17.3 parts of this solution is added, methyl ethyl ketone (MEK) (3 g), an aliphatic polyisocyanate based on hexamethylene diisocyanate (HDI) (DESMODUR N-3390, product of Miles, 4.3 g), and 0.108 g of a 1% MEK solution of dibutyltin dilaurate. After mixing well, a portion of the coating solution is poured onto clean steel panels and is drawn down to a uniform wet film of thickness 0.076 mm (0.003") with a doctor blade. The panels are dried in a hood for 30 min, and then baked in an oven at 135°C for 1 h. Testing of the panels gives the following results: Reverse impact: 560 mm/kg (10 in/lb); Pencil hardness: H; Gloss at 20°: 91; Gloss at 60°: 105; T-bend: passes without cracking; Cross-cut adhesion (ASTM D-3359): 5.

### Example 20. Melamine Coating

The terpolymer of Example 14 (21 g) is dissolved in methyl amyl ketone (9 g) and butyl acetate (9 g). To the solution is added CYMEL 303 melamine resin (9 g, product of American Cyanamid) and CYCAT 4040 catalyst (40% p-toluenesulfonic acid in isopropyl alcohol, 0.7 g, product of American Cyanamid). After mixing well, a portion of the coating solution is poured onto clean steel panels and is drawn down to a uniform wet film of thickness 0.076 mm (0.003") with a doctor blade. The panels are dried in a hood for 30 min., and then baked in an oven at 150°C for 30 min. Testing of the panels gives the following results: Reverse impact: 280 mm/kg (5 in/lb); Pencil hardness: 3H; Gloss at 20°: 120; Gloss at 60°: 135.

### Example 21. Melamine Coating

The terpolymer of Example 16 (21 g) is dissolved in MAK (9 g) and butyl acetate (9 g). To the solution is added CYMEL 303 melamine resin (9 g) and CYCAT 4040 catalyst (0.7 g). After mixing well, a portion of the coating solution is poured onto clean steel panels and is drawn down to a uniform wet film of thickness 0.076 mm (0.003") with a doctor blade. The panels are dried in a hood for 30 min., and then baked in an oven at 150°C for 30 min. Testing of the panels gives the following results: Reverse impact: 280 mm/kg (5 in/lb); Pencil hardness: H; Gloss at 20°: 120; Gloss at 60°: 125.

### Example 22. Preparation of a Thermoset Polyester Coating

In this example, an allyl alcohol/allyl butyrate/methyl methacrylate terpolymer is formulated into a thermosetting polyester coating. The terpolymer of Example 14 (1904 g) and isophthalic acid (94 g) are charged into a reactor and heated to 220°C while sparging nitrogen through the mixture. After the acid number reaches 60-70 mg KOH/g, adipic acid (73 g), isophthalic acid (60 g), and maleic anhydride (6 g) are added, and the mixture is reheated to 220°C. Heating continues at 220°C until the acid number drops to 10-12 mg KOH/g. 2-Ethoxyethanol acetate (500 g) is then added.

Six hundred grams of the resulting polyester solution is charged into a reactor equipped with an agitator, thermometer, reflux condenser, addition funnel, and nitrogen inlet, and the mixture is heated to 120°C. A mixture of 2-hydroxyethyl acrylate (10 g), ethyl acrylate (54 g), styrene (5 g), methyl methacrylate (20 g), methacrylic acid (2 g), and di-t-butylperoxide (1.0 g) is charged to the addition funnel. The acrylate monomer mixture is added to the polyester mixture over 2 h, and is then kept at 120°C for another hour. t-Butyl perbenzoate (0.2 g) is added, and the mixture is kept at 120°C for another 2 h. A second 0.2 g portion of t-butyl perbenzoate is added, and heating continues for another 2 h. The product solution is finally diluted with 1-butanol (30 g) and xylene (20 g). This solution is expected to be useful as a thermosettable coating. The solution can be applied as a film, and allowed to cure at room temperature or elevated temperature.

### Example 23. Preparation of an Alkyd Coating

In this example, an alkyd coating is prepared from an allyl alcohol/allyl butyrate/methyl methacrylate terpolymer.

The terpolymer of Example 14 (331 g), safflower oil (64 g), lithium hydroxide (0.03 g), phthalic anhydride (25.5 g), maleic anhydride (0.22 g), triphenyl phosphite (0.07 g), and xylene (18 g) are charged into a reactor equipped with an agitator, thermometer, reflux condenser with a Dean-Stark trap, and nitrogen inlet. The mixture is heated to 240°C, and is kept at that temperature until the acid number drops to 10-20 mg KOH/g. After the reaction, xylene is added to dilute the mixture to 50 wt.% solids. This solution is expected to be useful as an alkyd coating. The solution can be applied as a film, and allowed to cure at room temperature or at elevated temperature.

### Example 24. Preparation of a Curable Acrylate Composition

In this example, a curable acrylate composition is prepared from an allyl alcohol/allyl acetate/methyl methacrylate terpolymer.

The terpolymer of Example 15 (100 g), acrylic acid (13.8 g), toluene (20 g), hydroquinone (0.15 g), and sulfuric acid (0.15 g), are charged into a reactor equipped with an agitator, thermometer, reflux condenser with Dean-Stark trap, and nitrogen inlet. The mixture is heated to reflux (about 100°C to 115°C), and water (3.4 g) is removed using the trap. After no additional water is being produced, the toluene is removed by vacuum distillation. The expected product is a terpolymer of allyl alcohol, allyl acetate and methyl methacrylate in which most or all of the hydroxyl groups from the original copolymer are converted to acrylate ester groups.

"CYMEL", "CYCAT", "DYLARK", "ARCOL", "T-HYDRO" and "DESMODUR" are all trade marks.

## Claims

1. A polymer containing hydroxyl groups and which comprises recurring units of:
(a) an allyl ester of the formula CH₂=CR'-CH₂-O-CO-R in which R is hydrogen or a saturated linear, branched, or cyclic C₁-C₃₀ alkyl, aryl, or aralkyl group, and R' is selected from the group consisting of hydrogen and C₁-C₅ alkyl; and
(b) ethylenically unsaturated alcohol selected from allylic alcohols of the formula CH₂=CR'-CH₂-OH, propoxylated allylic alcohols of the formula CH₂=CR'-CH₂-(A)ₙ-OH and mixtures of such allylic alcohols and propoxylated allylic alcohols, and in which R' is selected from the group consisting of hydrogen and C₁-C₅ alkyl, A is an oxypropylene group and n, which is the average number of oxypropylene groups in the propoxylated allylic alcohol, has a value less than or equal to 2;
said polymer having an average hydroxyl functionality within the range of 2 to 10, and a number average molecular weight within the range of 300 to 15,000.

2. A polymer as claimed in claim 1 characterised in that it has from 5 to 95 wt.% of allyl ester recurring units and from 95 to 5 wt.% of alcohol recurring units.

3. A polymer as claimed in claim 1 characterised in that it includes recurring units of:
(c) a vinyl monomer other than (a) or (b).

4. A polymer as claimed in claim 3 characterised in that the vinyl monomer is selected from vinyl aromatic monomers, vinyl halides, vinyl ethers, acrylonitrile, methacrylonitrile, acrylamide, methacrylamide, acrylates, methacrylates, and vinyl esters.

5. A polymer as claimed in claim 3 or claim 4 having from 1 to 98 wt.% of the allyl ester, from 1 to 98 wt.% of the alcohol, and from 1 to 98 wt.% of the vinyl monomer.

6. A polymer as claimed in claim 3 or claim 4 characterised in that the ethylenically unsaturated alcohol is a propoxylated allylic alcohol and said polymer has from 1 to 97 wt.% of the allyl ester, from 2 to 98 wt.% of the propoxylated allylic alcohol and from 1 to 97 wt.% of the vinyl monomer.

7. A polymer as claimed in any one of claims 1 to 6 characterised in that it has a hydroxyl number within the range of 10 mg KOH/g to 950 mg KOH/g.

8. A polymer as claimed in any one preceding claim characterised in that the allyl ester has the formula CH₂=CH-CH₂-O-CO-R in which R is a C₁-C₅ alkyl group.

9. A polymer as claimed in any one preceding claim characterised in that the allylic alcohol is selected from allyl alcohol and methallyl alcohol.

10. A polymer as claimed in any one preceding claim characterised in that the propoxylated allylic alcohol has the formula CH₂=CH-CH₂-(A)ₙ-OH in which A is an oxypropylene group, and n has a value less than or equal to 2.

11. A polymer as claimed in any one preceding claim characterised in that it has a number average molecular weight within the range of 500 and 3000, and a hydroxyl number within the range of 25 mg KOH/g to 500 mg KOH/g.

12. A polymer as claimed in claim 1 or claim 2 in which the ethylenically unsaturated alcohol is selected from propoxylated allylic alcohols, said polymer having a number average molecular weight of 500 to 3000 and a hydroxyl number in the range of 10 mg KOH/g to 480 mg KOH/g.

13. A polymer derivative comprising the reaction product of (a) a polymer as claimed in any one of claims 1 to 11 and (b) a member selected from the group consisting of:
(1) an anhydride, to produce a thermoset polyester;
(2) a di- or polyisocyanate or an isocyanate-terminated prepolymer, to produce a polyurethane coating or adhesive;
(3) a styrene/maleic anhydride copolymer, to produce a crosslinked polymeric resin;
(4) a melamine resin, to produce a melamine coating;
(5) a fatty acid, to produce an alkyd coating;
(6) a fatty acid, a low molecular weight polyol, and a polyisocyanate, to produce a polyurethane-modified alkyd coating; and
(7) an acrylic acid or acrylic acid derivative, to produce an acrylate composition.

14. A polymer blend which comprises:
(a) a polymer as claimed in any one of claims 1 to 11 and
(b) one or more polymers selected from the group consisting of polyether polyols, phenolic resins, acrylates, and epoxy resins.

15. The reaction product of:
(a) the polymer blend of claim 14; and
(b) a member selected from the group consisting of:
(1) an anhydride, to produce a thermoset polyester;
(2) a di- or polyisocyanate or an isocyanate-terminated prepolymer, to produce a polyurethane coating or adhesive;
(3) a styrene/maleic anhydride copolymer, to produce a crosslinked polymeric resin;
(4) a melamine resin, to produce a melamine coating;
(5) a fatty acid, to produce an alkyd coating;
(6) a fatty acid, a low molecular weight polyol, and a polyisocyanate, to produce a polyurethane-modified alkyd coating; and
(7) an acrylic acid or acrylic acid derivative, to produce an acrylate composition.

## Patentansprüche

1. Hydroxylgruppen enthaltendes Polymer, das wiederkehrende Einheiten
(a) eines Allylesters der Formel
CH₂=CR'-CH₂-O-CO-R,
in der R Wasserstoff oder eine gesättigte lineare, verzweigte oder cyclische C₁-C₃₀-Alkyl-, Aryl- oder Aralkylgruppe bedeutet und R' aus der Gruppe Wasserstoff und C₁-C₅-Alkyl ausgewählt ist,
(b) eines ethylenisch ungesättigten Alkohols, der aus Allylalkoholen der Formel CH₂=CR'-CH₂-OH, propoxylierten Allylalkoholen der Formel CH₂=CR'-CH₂-(A)ₙ-OH und Gemischen aus solchen Allylalkoholen und propoxylierten Allylalkoholen ausgewählt ist, wobei R' aus der Gruppe Wasserstoff und C₁-C₅-Alkyl ausgewählt ist, A eine Oxypropylengruppe bedeutet und n, das das Zahlenmittel der Oxypropylengruppen im propoxylierten Allylalkohol darstellt, einen Wert von weniger oder gleich 2 hat,
umfaßt, wobei das Polymer eine durchschnittliche Hydroxylfunktionalität im Bereich von 2 bis 10 und ein zahlenmittleres Molekulargewicht im Bereich von 300 bis 15.000 aufweist.

2. Polymer nach Anspruch 1, dadurch gekennzeichnet daß es 5 bis 95 Gew.-% wiederkehrende Allylestereinheiten und 95 bis 5 Gew.-% wiederkehrende Alkoholeinheiten aufweist.

3. Polymer nach Anspruch 1, dadurch gekennzeichnet, daß es wiederkehrende Einheiten
(c) eines anderen Vinylmonomeren als (a) oder (b)
aufweist.

4. Polymer nach Anspruch 3, dadurch gekennzeichnet, daß das Vinylmonomer aus vinylaromatischen Monomeren, Vinylhalogeniden, Vinylethern, Acrylnitril, Methacrylnitril, Acrylamid, Methacrylamid, Acrylaten, Methacrylaten und Vinylestern ausgewählt wird.

5. Polymer nach Anspruch 3 oder 4, das 1 bis 98 Gew.-% des Allylesters, 1 bis 98 Gew.-% des Alkohols und 1 bis 98 Gew.-% des Vinylmonomeren aufweist.

6. Polymer nach Anspruch 3 oder 4, dadurch gekennzeichnet, daß der ethylenisch ungesättigte Alkohol ein propoxylierter Allylalkohol ist und das Polymer 1 bis 97 Gew.-% des Allylesters, 2 bis 98 Gew.-% des propoxylierten Allylalkohols und 1 bis 97 Gew.-% des Vinylmonomeren aufweist.

7. Polymer nach einem der Ansprüche 1 bis 6, dadurch gekennzeichnet, daß es eine Hydroxylzahl im Bereich von 10 mg KOH/g bis 950 mg KOH/g hat.

8. Polymer nach einem der vorstehenden Ansprüche, dadurch gekennzeichnet, daß der Allylester die Formel CH₂=CH-CH₂-O-CO-R hat, in der R eine C₁-C₅-Alkylgruppe bedeutet.

9. Polymer nach einem der vorstehenden Ansprüche, dadurch gekennzeichnet, daß der Allylalkohol aus Allylalkohol und Methallylalkohol ausgewählt wird.

10. Polymer nach einem der vorstehenden Ansprüche, dadurch gekennzeichnet, daß der propoxylierte Allylalkohol die Formel CH₂-CH-CH₂-(A)ₙ-OH hat, in der A eine Oxypropylengruppe bedeutet und n einen Wert von weniger oder gleich 2 hat.

11. Polymer nach einem der vorstehenden Ansprüche, dadurch gekennzeichnet, daß es ein zahlenmittleres Molekulargewicht im Bereich von 500 bis 3.000 und eine Hydroxylzahl im Bereich von 25 mg KOH/g bis 500 mg KOH/g hat.

12. Polymer nach Anspruch 1 oder 2, in dem der ethylenisch ungesättigte Alkohol aus propoxylierten Allylalkoholen ausgewählt wird und das ein zahlenmittleres Molekulargewicht von 500 bis 3.000 und eine Hydroxylzahl im Bereich von 10 mg KOH/g bis 480 mg KOH/g hat.

13. Polymerderivat, das das Reaktionsprodukt aus (a) einem Polymer nach einem der Ansprüche 1 bis 11 und (b) einer aus folgender Gruppe ausgewählten Komponente umfaßt:
(1) einem Anhydrid, um einen wärmehärtbaren Polyester herzustellen;
(2) einem Di- oder Polyisocyanat oder einem Prepolymer mit Isocyanatendgruppen, um eine Polyurethanbeschichtung oder einen Klebstoff herzustellen;
(3) einem Styrol-/Maleinsäureanhydrid-Copolymer, um ein vernetztes Polymerharz herzustellen,
(4) einem Melaminharz, um eine Melaminbeschichtung herzustellen,
(5) einer Fettsäure, um eine Alkydbeschichtung herzustellen,
(6) einer Fettsäure, einem Polyol mit niedrigem Molekulargewicht und einem Polyisocyanat, um eine mit Polyurethan modifizierte Alkydbeschichtung herzustellen, und
(7) einer Acrylsäure oder einem Acrylsäurederivat, um eine Acrylatzusammensetzung herzustellen.

14. Polymermischung die
(a) ein Polymer nach einem der Ansprüche 1 bis 11 und
(b) eines oder mehrere Polymere aus der Gruppe Polyetherpolyole, Phenolharze, Acrylate und Epoxidharze
umfaßt.

15. Reaktionsprodukt aus
(a) der Polymermischung von Anspruch 14 und
(b) einer aus folgender Gruppe ausgewählten Komponente:
(1) einem Anhydrid, um einen wärmehärtbaren Polyester herzustellen;
(2) einem Di- oder Polyisocyanat oder einem Prepolymer mit Isocyanatendgruppen, um eine Polyurethanbeschichtung oder einen Klebstoff herzustellen;
(3) einem Styrol-/Maleinsäureanhydrid-Copolymer, um ein vernetztes Polymerharz herzustellen,
(4) einem Melaminharz, um eine Melaminbeschichtung herzustellen,
(5) einer Fettsäure, um eine Alkydbeschichtung herzustellen,
(6) einer Fettsäure, einem Polyol mit niedrigem Molekulargewicht und einem Polyisocyanat, um eine mit Polyurethan modifizierte Alkydbeschichtung herzustellen, und
(7) einer Acrylsäure oder einem Acrylsäurederivat, um eine Acrylatzusammensetzung herzustellen.

## Revendications

1. Polymère contenant des groupes hydroxyle et qui comprend des unités structurales de:
(a) un ester allylique de formule CH₂=CR'-CH₂-O-CO-R où R est l'hydrogène ou un groupe alkyle, aryle ou aralkyle en C₁-C₃₀ linéaire, ramifié ou cyclique et R' est choisi dans le groupe consistant en l'hydrogène et alkyle en C₁-C₅; et
(b) un alcool éthyléniquement insaturé choisi parmi les alcools allyliques de formule CH₂=CR'-CH₂-OH, les alcools allyliques propoxylés de formule CH₂=CR'-CH₂-(A)ₙ-OH et les mélanges de tels alcools allyliques et alcools allyliques propoxylés, et où R' est choisi dans le groupe consistant en l'hydrogène et alkyle en C₁-C₅, A est un groupe oxypropylène et n, qui est le nombre moyen de groupes oxypropylène dans l'alcool allylique propoxylé, a une valeur inférieure ou égale à 2;
ledit polymère ayant une fonctionnalité hydroxyle moyenne dans le domaine de 2 à 10 et une masse moléculaire moyenne en nombre dans le domaine de 300 à 15000.

2. polymère selon la revendication 1 caractérisé en ce qu'il a de 5 à 95% en masse d'unités structurales d'ester allylique et de 95 à 5% en masse d'unités structurales d'alcool.

3. Polymère selon la revendication 1 caractérisé en ce qu'il comprend des unités structurales de:
(c) un monomère vinylique autre que (a) ou (b).

4. Polymère selon la revendication 3 caractérisé en ce que le monomère vinylique est choisi parmi les monomères vinyliques aromatiques, les halogénures de vinyle, les éthers vinyliques, l'acrylonitrile, le méthacrylonitrile, l'acrylamide, le méthacrylamide, les acrylates, les méthacrylates et les esters vinyliques.

5. Polymère selon la revendication 3 ou la revendication 4 ayant de 1 à 98% en masse d'ester allylique, de 1 à 98% en masse d'alcool et de 1 à 98% en masse de monomère vinylique.

6. polymère selon la revendication 3 ou la revendication 4 caractérisé en ce que l'alcool éthyléniquement insaturé est un alcool allylique propoxylé et ledit polymère a de 1 à 97% en masse d'ester allylique, de 2 à 98% en masse d'alcool allylique propoxylé et de 1 à 97% en masse de monomère vinylique.

7. Polymère selon l'une quelconque des revendications 1 à 6 caractérisé en ce qu'il a un indice d'hydroxyle dans le domaine de 10 mg de KOH/g à 950 mg de KOH/g.

8. Polymère selon l'une quelconque des revendications précédentes caractérisé en ce que l'ester allylique a la formule CH₂=CH-CH₂-O-CO-R où R est un groupe alkyle en C₁-C₅.

9. Polymère selon l'une quelconque des revendications précédentes caractérisé en ce que l'alcool allylique est choisi parmi l'alcool allylique et l'alcool méthallylique.

10. Polymère selon l'une quelconque des revendications précédentes caractérisé en ce que l'alcool allylique propoxylé a la formule CH₂=CH-CH₂-(A)ₙ-OH où A est un groupe oxypropylène et n a une valeur inférieure ou égale à 2.

11. Polymère selon l'une quelconque des revendications précédentes caractérisé en ce qu'il a une masse moléculaire moyenne en nombre dans le domaine de 500 à 3000 et un indice d'hydroxyle dans le domaine de 25 mg de KOH/g à 500 mg de KOH/g.

12. Polymère selon la revendication 1 ou la revendication 2 dans lequel l'alcool éthyléniquement insaturé est choisi parmi les alcools allyliques propoxylés, ledit polymère ayant une masse moléculaire moyenne en nombre de 500 à 3000 et un indice d'hydroxyle dans le domaine de 10 mg de KOH/g à 480 mg de KOH/g.

13. Dérivé polymère comprenant le produit de réaction de (a) un polymère selon l'une quelconque des revendications 1 à 11 et (b) un élément choisi dans le groupe consistant en:
(1) un anhydride, pour produire un polyester thermodurcissable;
(2) un di- ou polyisocyanate ou un prépolymère à terminaisons isocyanate, pour produire un revêtement ou adhésif de polyuréthane;
(3) un copolymère styrène/anhydride maléique, pour produire une résine polymère réticulée;
(4) une résine de mélamine, pour produire un revêtement de mélamine;
(5) un acide gras, pour produire un revêtement d'alkyde;
(6) un acide gras, un polyol de faible masse moléculaire et un polyisocyanate, pour produire un revêtement d'alkyde modifié par polyuréthane; et
(7) un acide acrylique ou dérivé d'acide acrylique, pour produire une composition d'acrylate.

14. Mélange de polymères qui comprend:
(a) un polymère selon l'une quelconque des revendications 1 à 11 et
(b) un ou plusieurs polymères choisis dans le groupe consistant en les polyétherpolyols, les résines phénoliques, les acrylates et les résines époxy.

15. Produit de réaction de:
(a) le mélange de polymères de la revendication 14, et
(b) un élément choisi dans le groupe consistant en:
(1) un anhydride, pour produire un polyester thermodurcissable;
(2) un di- ou polyisocyanate ou un prépolymère à terminaisons isocyanate, pour produire un revêtement ou adhésif de polyuréthane;
(3) un copolymère styrène/anhydride maléique, pour produire une résine polymère réticulée;
(4) une résine de mélamine, pour produire un revêtement de mélamine;
(5) un acide gras, pour produire un revêtement d'alkyde;
(6) un acide gras, un polyol de faible masse moléculaire et un polyisocyanate, pour produire un revêtement d'alkyde modifié par polyuréthane; et
(7) un acide acrylique ou dérivé d'acide acrylique, pour produire une composition d'acrylate.
